**Europäisches Patentamt**

**European Patent Office**

**Office européen des brevets**

(19)

(11) Numéro de publication: **0 192 547 B1**

(12) **FASCICULE DE BREVET EUROPEEN**

(45) Date de publication du fascicule du brevet:
11.01.89

(51) Int. Cl.⁴: **B60T 11/20**

(21) Numéro de dépôt: **86400250.6**

(22) Date de dépôt: **06.02.86**

(54) **Dispositif de commande pour maître cylindre double.**

(30) Priorité: **20.02.85 FR 8502462**

(43) Date de publication de la demande:
**27.08.86 Bulletin 86/35**

(45) Mention de la délivrance du brevet:
**11.01.89 Bulletin 89/2**

(84) Etats contractants désignés:
**DE GB IT**

(56) Documents cités:
**DE-A- 2 941 781**
**GB-A- 1 163 722**
**GB-A- 2 141 505**
**US-A- 2 123 102**
**US-A- 2 123 102**
**US-A- 3 220 189**
**US-A- 3 220 189**
**US-A- 3 543 298**

(73) Titulaire: **BENDIX France, 126, rue de Stalingrad,
F-93700 Drancy(FR)**

(72) Inventeur: **Douillet, Christian, 5, rue Lavoisier,
F-92800 Puteaux(FR)**

(74) Mandataire: **Lejet, Christian et al, Division Technique
Service Brevets BENDIX Europe 126, rue de Stalingrad,
F-93700 Drancy(FR)**

ACTORUM AG

## Description

L'invention se rapporte à un dispositif de commande maître-cylindre double notamment pour véhicule automobile.

L'invention concerne plus particulièrement un dispositif de commande pour maître-cylindre double du type à deux maître-cylindres placés parallèlement côte à côte ce dispositif étant susceptible d'être placé entre une pédale d'actionnement et des pistons des maître-cylindres.

Dans ce type d'installation, le maître-cylindre est fixé à une partie fixe du véhicule et la pédale est articulée par rapport également à une partie fixe du véhicule. Le dispositif de commande situé entre cette pédale et le maître-cylindre, doit pouvoir assurer la transmission d'efforts sans guidage intermédiaire, et donc le dispositif de commande doit être rigide. On connaît par le brevet américain US-A 3 220 189 un tel dispositif de commande qui est réalisé en une pièce unique monobloc comportant d'une part un accrochage à la pédale et d'autre part deux tiges de poussée parallèles susceptibles d'actionner les pistons des maître-cylindres. Un tel système présente l'inconvénient majeur d'interdire tout fonctionnement du maître-cylindre si l'un des pistons est bloqué dans son alésage. Par ailleurs ce type de maître-cylindre peut commander un circuit pilote qui ne nécessite pour son fonctionnement qu'un faible déplacement de liquide, c'est-à-dire une course faible au niveau des pistons. Par contre, ce circuit-pilote travaillant en fonction de la pression engendrée par le maître-cylindre, il est nécessaire d'avoir une bonne sensibilité au niveau de la pédale d'actionnement afin de contrôler correctement la pression engendrée dans les maître-cylindres.

Dans ce but l'invention propose un dispositif de commande permettant le fonctionnement d'un maître-cylindre si l'autre est bloqué et comportant des moyens de compensation de la course de la pédale permettant de doser les pressions dans le maître-cylindre.

Dans ce but l'invention propose un dispositif de commande pour maître-cylindre double du type à deux maître-cylindres placés parallèlement côte à côte, ledit dispositif étant susceptible d'être placé entre une pédale d'actionnement et des pistons desdits maître-cylindres, ledit dispositif comportant des moyens de compensation de la course d'une tige de commande placée du côté de ladite pédale par rapport à la course de deux tiges de poussée indépendantes susceptibles d'agir sur chacun desdits pistons, caractérisé en ce que lesdits moyens de compensation comportent un boîtier solidaire de ladite tige de commande et en ce que ledit boîtier reçoit en guidage et en coulissement les deuxdites tiges de poussée.

On comprend que grâce à une telle structure, les tiges de poussée étant indépendantes, si l'une d'elle est bloquée par suite d'un blocage du piston dans son alésage, l'autre tige peut solliciter normalement l'autre desdits pistons. Par ailleurs les tiges de poussée reçoivent un effort de la tige de commande sans qu'il y ait identité des courses de la tige de commande et des tiges de poussée.

D'autres caractéristiques et avantages du dispositif de commande objet de la présente invention, ressortiront de la description suivante de deux modes de réalisation, donnés à titre illustratif mais nullement limitatif, faite en relation avec les dessins annexés, dans lesquels:

- la Figure 1 est une vue en perspective du dispositif de commande objet de l'invention placé entre un maître-cylindre double et une pédale de frein;
- la Figure 2 est une vue en coupe partielle du dispositif de la Figure 1; et
- la Figure 3 est une vue similaire à la Figure 2 pour un deuxième mode de réalisation.

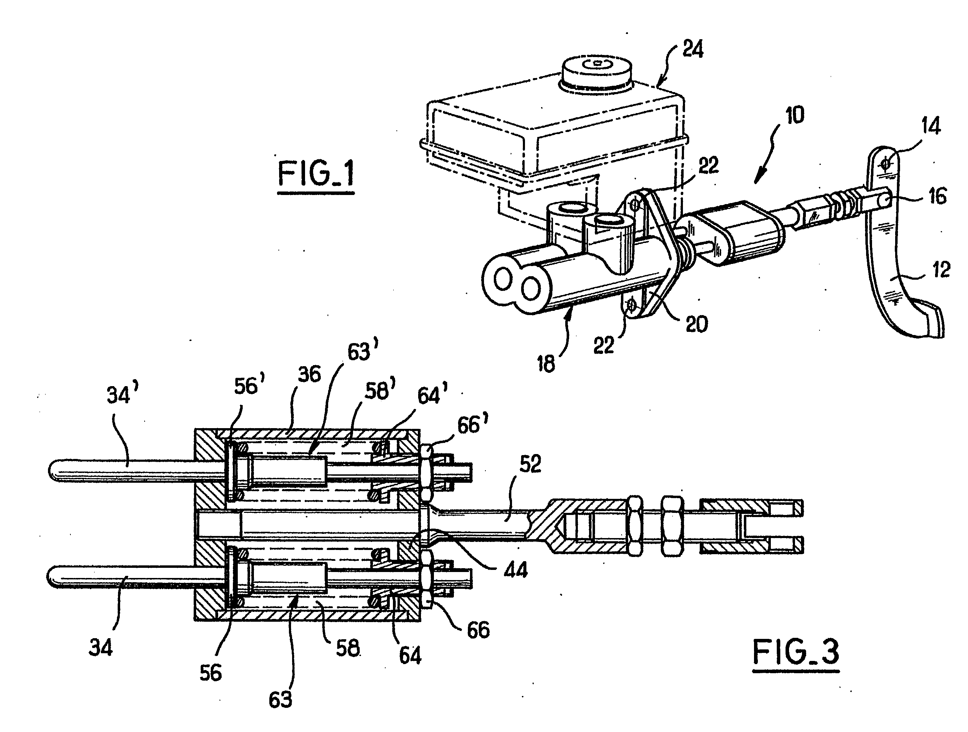

La Figure 1 représente en perspective un dispositif de commande pour maître-cylindre double désigné dans son ensemble par la référence 10 placé entre une pédale de freinage 12 susceptible d'être montée articulée sur une partie fixe du véhicule (non représentée) au moyen d'un perçage 14 susceptible de recevoir un axe de maintien. La liaison entre le dispositif de commande 10 et la pédale 12 est assurée par un axe formant pivot 16 passant à travers des orifices correspondants formés dans le dispositif de commande 10 et la pédale 12. A son autre extrémité le dispositif de commande coopère avec un maître-cylindre désigné dans son ensemble par la référence 18 susceptible d'être fixé sur une partie fixe du véhicule (non représentée) au moyen d'une bride de fixation 20 comportant des orifices de fixation 22. D'une façon conventionnelle le maître-cylindre 18 est alimenté en liquide de frein au moyen d'un réservoir désigné dans son ensemble par la référence 24 et représenté symboliquement sur la Figure 1.

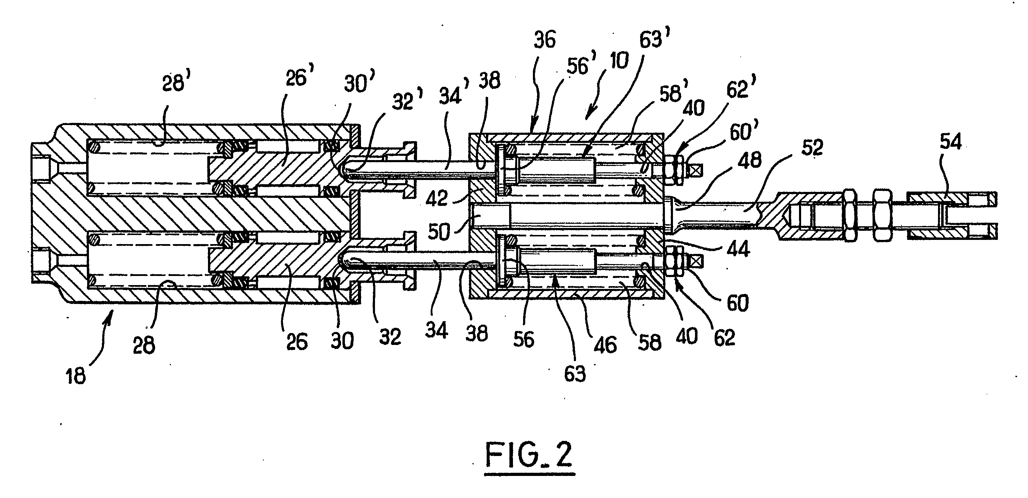

En se reportant aux Figures 1 et 2 on voit que le maître-cylindre 18 est du type double à deux maître-cylindres simples placés parallèlement côte à côte. Chacun de ces maître-cylindres comprend un piston 26, 26' susceptible de coulisser dans un alésage 28, 28' formé dans le corps du maître-cylindre. Chacun des pistons porte à son extrémité côté dispositif de commande une creusure 30, 30' à fond sphérique avec laquelle coopère une extrémité sphérique 32,32' de deux tiges de poussée 34 et 34'. Les deux tiges de poussée 34 et 34' sont susceptibles de coulisser par rapport à un corps ou boîtier 36 du dispositif de commande 10 au moyen d'alésages 38 et 40 formés sur des parois 42 et 44 du boîtier 36. Outre les parois 42 et 44 le boîtier 36 comprend une entretoise 46 sur laquelle sont pressées les parois 42 et 44 au moyen d'un épaulement 48 et d'une portion filetée 50 formée sur une tige de commande 52. Cette tige de commande 52 se termine par une fourche 54 munie de perçages et susceptible d'être fixée sur la pédale 12 au moyen d'un axe formant pivot 16. Chacune des tiges de poussée 34 et 34' comporte un épaulement 56, 56' sollicité vers la gauche en se référant à la Figure 2 par un ressort 58, 58' prenant appui à son autre extrémité sur la paroi 44. La partie de la tige de poussée 34 ou 34' qui fait saillie hors du boîtier 36 au travers de la paroi 44 est munie d'un filetage 60, 60' et d'écrous 62, 62' permettant d'assurer un positionnement relatif entre les tiges de poussée 34 et 34' et le boîtier 36 du dispositif de commande 10. Il est donc possible grâce au filetage 60 et aux écrous 62 de régler la précontrainte du ressort 58, ceci étant vrai pour chacune des tiges de poussée 34 et 34'.

L'ensemble épaulement 56 (56'); ressort 58 (58') et réglage 60–62 (60'–62'), forme un moyen de compensation 63 (63') de la course de la tige de commande 52 par rapport aux tiges de poussée 34 (34').

Lorsque la pédale de freinage ou pédale d'actionnement est sollicitée, la tige de commande 52 est sollicitée vers la gauche en se référant à la Figure 2 le boîtier 36 se déplace également vers la gauche avec la tige de commande 52. Dans un premier temps, lorsque les efforts de réaction des pistons 26 et 26' sont inférieurs à la précontrainte des ressorts 58 et 58' l'ensemble tige de commande 52 boîtier 36 tiges de poussée 34 et 34' ainsi que les pistons 26 et 26' se déplacent simultanément vers la gauche. Dans un deuxième temps, lorsque les efforts antagonistes dûs aux ressorts et à la pression exercée dans les maître-cylindres excèdent la précontrainte des ressorts 58 et 58' un mouvement relatif apparaît entre les tiges de poussée 34 et 34' par rapport au boîtier 36 à l'encontre des ressorts 58 et 58' qui sont comprimés au travers des épaulements 56 et 56'. Dans cette phase de fonctionnement, les courses des pistons 26 et 26' sont plus faibles que la course de la tige de commande 52 mais ces pistons 26 et 26' reçoivent l'effort défini par la tige de commande 52. On obtient donc un accroîssement de course de la tige de commande 52 permettant un meilleur dosage du freinage même lorsque les courses des pistons 26 et 26' sont très faibles.

Si un des circuits est défaillant, ou bien si un des pistons 26 ou 26' se trouve bloqué dans son alésage la tige de commande 52 peut toujours se déplacer vers la gauche en se référant à la Figure 2 et actionner l'autre circuit ou l'autre piston intact et en état de marche. Si un circuit est défaillant, c'est-à-dire qu'il n'y a pas d'accroîssement de pression dans le maître-cylindre correspondant, la tige de poussée correspondante ne se déplacera pas par rapport au boîtier 36 et le piston correspondant sera déplacé vers la gauche en se référant à la Figure 2 pendant que le côté en état de fonctionnement normal verra un mouvement relatif entre la tige de poussée correspondante et le boîtier 36. En cas de blocage d'un des pistons en position repos par exemple tel que représenté sur la Figure 2, lors de l'actionnement de la tige de commande 52, le piston étant immobile, la tige de poussée correspondante sera fixe par rapport au maître-cylindre, et la tige de commande 52 se déplacera avec le boîtier 36 à l'encontre du ressort 58 ou 58' correspondant au piston bloqué. L'autre circuit fonctionnant de la même façon que décrit précédemment.

On voit que grâce à l'invention, il est possible de réaliser une compensation des courses tige de commande 52 d'une part et piston 26, 26' d'autre part selon une loi qui dépend de la raideur des ressorts 58 et 58' et de la précontrainte appliquée sur ceux-ci au moyen des liaisons filetées et des écrous respectivement 60 et 62; le dispositif de commande restant opérationnel selon les mêmes critères si un des circuits est défaillant soit par suite d'une fuite de liquide de freinage soit par suite d'un blocage de piston.

En se reportant à la Figure 3 qui représente un deuxième mode de réalisation de l'invention on voit que la précontrainte des ressorts 58 et 58' est assurée par une douille filetée 64 et 64' vissée dans la paroi 44 et équipée d'un contre-écrou 66, 66', la douille filetée 64, 64' comportant un perçage de guidage des tiges de poussée 34 et 34'. Grâce à cette structure, qui par ailleurs fonctionne d'une façon identique au mode de réalisation précédent, la position des tiges de poussée 34 et 34' est fixe au repos par rapport au boîtier 36 et permet un préréglage de la précontrainte sans changement de position des tiges 34 et 34' par rapport audit boîtier 36.

Quoique la présente invention ait été décrite en relation avec deux modes de réalisation elle ne s'en trouve pas limitée mais est au contraire susceptible de modifications et de variantes qui apparaîtront à l'homme de l'art.

## Revendications

1. Dispositif de commande (10) pour maître-cylindre double (18) du type à deux maître-cylindres placés parallèlement côte à côte, ledit dispositif (10) étant susceptible d'être placé entre une pédale d'actionnement (12) et des pistons (26, 26') desdits maître-cylindres, ledit dispositif (10) comportant des moyens de compensation (63, 63') de la course d'une tige de commande (52) placée du côté de ladite pédale (12) par rapport à la course de deux tiges de poussée (34, 34') indépendantes susceptibles d'agir sur chacun desdits pistons (26, 26'), caractérisé en ce que lesdits moyens de compensation (63, 63') comportent un boîtier (36) solidaire de ladite tige de commande (52) et en ce que ledit boîtier (36) reçoit en guidage et en coulissement les deuxdites tiges de poussée (34, 34').

2. Dispositif de commande selon la revendication 1, caractérisé en ce que lesdits moyens de compensation (63, 63') sont placés entre ladite tige de commande (52) et les deux tiges de poussée (34, 34').

3. Dispositif de commande selon la revendication 1, caractérisé en ce que chacune desdites tiges (34, 34') comporte un épaulement (56, 56') logé dans le boîtier (36) et sollicité axialement au moyen d'un élément élastique réglable (58, 58').

4. Dispositif de commande selon la revendication 3, caractérisé en ce que lesdites tiges de poussée (34, 34') comportent à leur extrémité opposée audit piston (26, 26') des moyens filetés (60, 62–60', 62') de positionnement de ladite tige (34, 34') par rapport audit boîtier (36) formant ainsi le réglage dudit moyen élastique (58, 58').

5. Dispositif de commande selon la revendication 3, caractérisé en ce que lesdits moyens élastiques (58, 58') sont susceptibles d'être réglés au moyen de douilles filetées (64, 64') formant appui aux éléments élastiques (58, 58') et déplaçables axialement par rapport audit boitier (36).

**Patentansprüche**

1. Betätigungsvorrichtung (10) für einen Tandem-Hauptzylinder (18), bei dem zwei Hauptzylinder parallel zueinander Seite an Seite angeordnet sind, wobei die Vorrichtung (10) zwischen ein Betätigungspedal (12) und die Kolben (26, 26') der Hauptzylinder einsetzbar ist und die Vorrichtung (10) Ausgleichsmittel (63, 63') zum Ausgleich des Hubes einer auf der Seite des Pedals (12) angeordneten Betätigungsstange (12) bezüglich des Hubes zweier unabhängiger Schubstangen (34, 34') aufweist, die auf jeden der Kolben (26, 26') einwirken, dadurch gekennzeichnet, daß die Ausgleichsmittel (63, 63') ein Gehäuse (36) aufweisen, das mit der Betätigungsstange (52) fest verbunden ist, und daß das Gehäuse (36) die beiden Schubstangen (34, 34') gleitend und führend aufnimmt.

2. Betätigungsvorrichtung nach Anspruch 1, dadurch gekennzeichnet, daß die Ausgleichsmittel (63, 63') zwischen der Betätigungsstange (52) und den beiden Schubstangen (34, 34') angeordnet sind.

3. Betätigungsvorrichtung nach Anspruch 1, dadurch gekennzeichnet, daß jede der Stangen (34, 34') eine Schulter (56, 56') aufweist, die in dem Gehäuse (36) angeordnet ist und mit Hilfe eines verstellbaren elastischen Teiles axial vorgespannt wird.

4. Betätigungsvorrichtung nach Anspruch 3, dadurch gekennzeichnet, daß die Schubstangen (34, 34') an ihrem dem Kolben (26, 26') entgegengesetzten Ende Gewindeteile (60, 62–60', 62') zum Positionieren der besagten Stange (34, 34') bezüglich des Gehäuses (36) aufweisen, wodurch sie die Verstellbarkeit der elastischen Mittel (58, 58') bilden.

5. Betätigungsvorrichtung nach Anspruch 3, dadurch gekennzeichnet, daß die elastischen Mittel (58, 58') mit Hilfe von Gewindehülsen (64, 64') verstellbar sind, die eine Anlage für die elastischen Teile (58, 58') bilden und bezüglich des Gehäuses (36) axial verschiebbar sind.

**Claims**

1. Control device (10) for a twin master cylinder (18) of the type with two master cylinders situated side by side and parallel to one another, the said device (10) being capable of being positioned between an actuating pedal (12) and pistons (26, 26') of the said master cylinders, the said device (10) comprising means of compensation (63, 63') of the travel of a control rod (52) situated on the same side as the said pedal (12) relative to the travel of two independent push rods (34, 34') which are capable of acting upon each of the said pistons (26, 26') characterised in that the said means of compensation (63, 63') comprise a casing (36) which is fixed to the said control rod (52) and in that the said casing (36) houses the two said push rods (34, 34') guidably and slidably.

2. Control device according to claim 1, characterised in that the said means of compensation (63, 63') are placed between the said control rod (52) and the two push rods (34, 34').

3. Control device according to claim 1, characterised in that each of the said rods (34, 34') comprises a shoulder (56, 56') which is housed in the casing (36) and is stressed axially by means of an adjustable elastic component (58, 58').

4. Control device according to claim 3, characterised in that the said push rods (34, 34') comprise at their ends opposite to the said piston (26, 26') threaded means (60, 62–60', 62') for positioning the said rod (34, 34') relative to the said casing (36) thus forming the adjustment of the said elastic means (58, 58').

5. Control device according to claim 3, characterised in that the said elastic means (58, 58') are capable of being adjusted by means of threaded bushes (64, 64') which form a support for the elastic components (58, 58') and which are moveable axially relative to the said casing (36).

**FIG_1**

**FIG_3**

FIG. 2